# EUROPEAN PATENT APPLICATION

(11) **EP 2 333 701 A1**
(43) Date of publication of application: **15.06.2011**
(21) Application number: 09177745.8
(22) Date of filing: 02.12.2009
(51) Int. Cl.: G06K 19/07, G06K 19/073

(54) **Using light-sensitivity for setting a response of an RFID transponder device**

(71) Applicant: NXP B.V., 5656 AG Eindhoven (NL)
(72) Inventor: Steiner, Mario, 8101 Gratkorn (AT)
(74) Representative: Krott, Michel

(57) **Abstract**

The invention relates to an RFID transponder device (1) comprising: i) a carrier assembly (99) comprising an antenna (5) having contacts (T1, T2) for being coupled to an RFID transponder chip (2), and ii) the RFID transponder chip (2) mounted on the carrier assembly (99) and being connected to the contacts (T1, T2). The RFID transponder device (1) is configured for allowing light to reach the RFID transponder chip (2), and the RFID transponder chip (2) is configured for responding, in operational use, to a request of an RFID reader device (RW), by sending a first response (TID, TID1) when exposed to light (999) with a first predefined light intensity, and by not sending the first response (TID, TID1) when exposed to light (999) with a second predefined light intensity that is different from the first predefined light intensity. The invention further relates to detection systems and position detection systems comprising such RFID transponder device. The invention provides an RFID transponder device which has additional functionality and which provided more information to the RFID reader device than the known RFID transponder devices. This additional functionality enables a wide range of applications.

## Description

### FIELD OF THE INVENTION

The invention relates to an RFID transponder device comprising:
i) a carrier assembly comprising an antenna having contacts for being coupled to an RFID transponder chip, and ii) the RFID transponder chip mounted on the carrier assembly and being connected to the contacts. The invention further relates to a detection system for detecting an object of interest within a space, wherein the detection system comprises such RFID transponder device. The invention also relates to a package or storage configured for receiving a product, wherein the package or storage comprises such RFID transponder device. Furthermore, the invention relates to a product provided with such RFID transponder device. Finally, the invention relates to the use of such RFID transponder device in the detection system in accordance with the invention.

### BACKGROUND OF THE INVENTION

Today, a huge amount of personal cards is in practical use, with an increasing focus on applications requiring higher security. RFID technology was implemented as a comfortable interface for the user and world-wide standardized about one decade ago in the ISO/IEC14443 Proximity Standard or ISO/IEC18000. This standard, as well as all other standards in the field of RFID are considered to be well-known to the person skilled in the art. RFID technology enabled electronic passports, contactless credit cards (E-banking), access control or public transport ticketing as successful solutions being part of our daily life. The typical format of such cards is ID-1, specified in the ISO/IEC7810 standard.

A new trend is visible wherein RFID technology is being used for supply chain management, asset tracking or similar. In such applications contactless stickers with ISO/IEC14443 or lSO18000 smartcard transponder chips are sticked to pallets, boxes or mobile phones, for example.

Another application of RFID technology is the replacement of UPC or EAN barcodes with RFID tags. RFID technology has a number of important advantages over the older barcode technology. They may not ever completely replace barcodes, due in part to their higher cost and the advantage of multiple data sources on the same object. The new electronic product code (EPC), along with several other schemes, is widely available at reasonable cost. The storage of data associated with tracking items requires many Terabytes. Filtering and categorizing RFID data is needed to create useful information. It is likely that goods will be tracked by the pallet using RFID tags, and at package level with Universal Product Code (UPC) or EAN from unique barcodes.

The unique identity is a mandatory requirement for RFID tags, despite special choice of the numbering scheme. RFID tag data capacity is large enough that each individual tag will have a unique code, while current bar codes are limited to a single type code for a particular product. The uniqueness of RFID tags means that a product may be tracked as it moves from location to location, finally ending up in the consumer's hands. This may help to combat theft and other forms of product loss. The tracing of products is an important feature that gets well supported with RFID tags containing a unique identity of the tag and also the serial number of the object. This may help companies to cope with quality deficiencies and resulting recall campaigns, but also contributes to concern about tracking and profiling of consumers after the sale.

It has also been proposed to use RFID for point-of-sale (POS) store checkout to replace the cashier with an automatic system which needs no barcode scanning. In the past this was not possible due to the higher cost of tags and existing POS process technologies. However, Industry Standard, a couture shop and recording studio in Ohio has successfully implemented a POS procedure that allows faster transaction throughput.

An RFID transponder device generally operates as follows. The RFID transponder device is brought within reach of an RFID reader device. The RFID reader device broadcasts an RF signal which is received by an antenna of the RFID transponder device. The RF signal triggers the RFID transponder device to send a response using the same antenna, which on its turn is received by the RFID reader device. The response of the RFID tag may vary from application to application, but generally it comprises at least one of: a state indicator, a product identifier, and a serial number.

A problem of the known RFID transponder device is that the information provided by the RFID transponder device is limited. The operation distance of an RFID transponder device (maximum distance between the device and an RFID reader device) is typically in the range of several meters to tens of meters. The only information that can be retrieved in the RFID reader device is that the object is within the operation distance of the reader.

### SUMMARY OF THE INVENTION

It is a first object of the invention to provide an RFID transponder device having additional functionality. It is a second object of the invention to provide a detection or position detection system comprising such RFID transponder device. It is a third object of the invention to provide further applications of such RFID transponder device.

The invention is defined by the independent claims. The dependent claims define advantageous embodiments.

In a first aspect, in accordance with the first object, the invention relates to a RFID transponder device comprising:
- a carrier assembly comprising an antenna having contacts for being coupled to an RFID transponder chip, and
- the RFID transponder chip mounted on the carrier assembly and being connected to the contacts, wherein the RFID transponder device is configured for allowing light to reach the RFID transponder chip. Furthermore, the RFID transponder chip is configured for responding, in operational use, to a request of an RFID reader device, by sending a first response when exposed to light with a first predefined light intensity, and by not sending the first response when exposed to light with a second predefined light intensity that is different from the first predefined light intensity.

The effect of the features of the invention is as follows. In operational use the RFID transponder receives a request from a RFID reader to send its response. When the first response is received this implies that the RFID transponder chip is exposed to light with the first predefined light intensity. When the first response is not received this implies that the RFID transponder is not exposed to the first predefined light intensity (this light intensity is referred to as the second light intensity in view of some embodiments to be discussed later). In view this, effectively, the RFID transponder device in accordance with the invention has been provided with light sensor functionality. The word "light" in the sense of the invention has to be interpreted as including infrared (IR) light, visible light, and ultra-violet (UV) light. The second light intensity has to be different from the first light intensity. The first light intensity and the second light intensity may also be range of values. In that case the second light intensity range preferably does not overlap with the first light intensity range. In any case, it must be noted that the gist of the invention is to make the operation of the RFID transponder device light-sensitive. In the invention this is accomplished by using this light-sensitivity for setting the response of an RFID transponder device, i.e. by making the response of the RFID transponder device dependent on the light intensity to which the RFID transponder is exposed. By doing so, additional functionality is provided in the RFID transponder device. This additional functionality, i.e. light sensing, may be exploited in different manners, as will become apparent in the discussion of the embodiments.

In an embodiment of the RFID transponder device in accordance with the invention the first predefined light intensity is darker than the second predefined light intensity. For example, the first predefined light intensity complies with darkness, and the second predefined light intensity with daylight. This embodiment is advantageous, because the RFID transponder chip is generally a semiconductor device which tends to become less operational when it is being radiated by light, and become subsequently operational again when the light is gone. It is the inventor's insight that this effect can effectively be used. In prior art solutions measures are always taken to minimize light-sensitivity, such as choosing special light insensitive process technologies, adding compensating circuitry for compensating for the light-sensitivity, and providing light-shielding. In this embodiment such sensitivity of a semiconductor device is exploited, rendering all those special measures superfluous.

In variant of last-mentioned embodiment the first predefined light intensity is brighter than the second predefined light intensity. Such reversal does not affect the operation of the device; in any case the response is dependent on the light intensity of the device, whether the first response is send at the first light intensity or at the second light intensity does not matter in that respect. The sensor still acts as a light sensor. The reversal at RFID transponder device level may require some changes at a higher application level, but this depends on the application.

In an embodiment of the RFID transponder device in accordance with the invention the RFID transponder chip is further configured for responding, in operational use, to the request of the RFID reader device with sending a second response when exposed to light having the second predefined light intensity, wherein the second predefined light intensity is different from the first predefined light intensity. The advantage of this embodiment is that the determination of the respective light intensity, to which the RFID transponder is exposed, is more accurate and faster. In the embodiment where no response is send at a given light intensity, there is time needed to determine whether the transponder chip is sending a response or not. In this embodiment the response is immediately sent as soon as the given light intensity is there.

In an embodiment of the RFID transponder device in accordance with the invention transponder chip is further configured for responding, in operational use, to the request of the RFID reader device with sending a third response when exposed to light having a third predefined light intensity, wherein the third predefined light intensity is different from the first predefined light intensity and the second predefined light intensity. The advantage of this embodiment is that more precise information can be obtained about the light intensity enabling more accurate determination of the environment of the transponder device. In further variants, the transponder device is configured for determining 4 or more different light intensities.

In an embodiment of the RFID transponder device in accordance with the invention the second response differs from the first response in at least one bit. The effect of the additional feature in this embodiment results in the fact that the at least one bit has become indicative for the light intensity. Embodiments of the transponder device which are sensitive to more than two different light intensities may require at least two bits to distinguish between those light intensities. It must be noted that in variant of this embodiment the two responses may also be totally different. This is no problem as long as it is known at application level that both responses originate from the same RFID transponder.

In an embodiment of the RFID transponder device in accordance with the invention at least one of the first response and the second response is a pseudo-random or random response. Pseudo-random or random responses may be easily distinguished from normal responses. An RFID transponder device specifically configured for that purpose is therefore an advantageous embodiment of the invention.

In an embodiment of the RFID transponder device in accordance with the invention the RFID transponder chip is configured for responding, in operational use, to a request of an RFID reader device, by sending a tag response, wherein the tag response is a function of the light intensity to which the transponder device is exposed, to obtain the first response and the second response. This embodiment is advantageous because the response of the transponder device gives even more information about the RFID transponder. Expressed differently, considering a start response at a specific light intensity. The more the light intensity changes the more the response will deviate from the start response. This will allow not only detecting the presence of an item within a certain space with a specific light intensity, but also it will provide a measure that may be indicative of the distance to the light source. In an embodiment the information obtained from the RFID transponder device would not only be "item present/not present", but also "item is at a certain distance and moving closer/further". Such embodiment is important when used in detection systems in manufacturing processes.

In an embodiment of the RFID transponder device in accordance with the invention said respective tag response as a function of the light intensity differs in at least a plurality of bits from earlier values. This is a possible implementation of coding a light-intensity dependent tag response.

An embodiment of the RFID transponder device in accordance with the invention further comprises a light-sensor arranged at or near the window for receiving said light, wherein the light-sensor is configured for controlling said responding of said transponder chip. This embodiment has several advantages. First of all, the light sensitivity can be optimized for specific applications, such as laser light, LED light, etc. Second, the first and second light intensities for which the RFID transponder device is sensitive can be more easily preset. In an embodiment the RFID transponder further comprises some control circuitry for the light-sensor for setting the desired sensitivity. The light-sensor may comprise a light-sensitive diode for example. Such device is typically an analog device. Light induces a current in the diode, which may be sensed by the control circuitry. This provides a convenient set-up for setting the sensitivity of the RFID transponder to the respective light-intensities. The output of the light-sensor or the control-circuitry connected to it is used to set the response of the RFID transponder chip (deactivate or randomize the response for a specific light intensity in some embodiments).

The light sensor may be located in different parts of the RFID transponder device. In a first variant the RFID transponder chip comprises the light-sensor. In a second variant the carrier assembly comprises the light-sensor.

An embodiment of the RFID transponder device in accordance with the invention comprises two-light sensors, each light sensor being optimized for a specific light intensity to obtain the desired sensitivities for the first and the second light intensity and thereby the light-intensity dependent response.

An embodiment of the RFID transponder device in accordance with the invention comprises a window or transparent material for allowing the light to reach the RFID transponder chip.

In an embodiment of the RFID transponder device in accordance with the invention the window is formed by partial removal of a cover shield at a location of the RFID transponder chip. In prior art solution cover shields are implemented to reduce or completely cancel the light-sensitivity of the RFID transponder device. In this embodiment the window is formed in at least part of this cover shield in order to enable the light the reach the RFID transponder chip which comprises the light-sensitive part (a diode or any other circuitry).

In an embodiment of the RFID transponder device in accordance with the invention the window is formed by a cover shield which is at least partially transparent for light. This embodiment is a variant of before-mentioned embodiment. Replacing the cover shield with a transparent material enables light to reach the RFID transponder chip.

In a second aspect, in accordance with the second object, the invention relates to a detection system for detecting an object of interest within a space. The system comprises:
- the space for receiving the object of interest, the space comprising, in operational use, light with a further predefined light intensity, and
- an RFID transponder device in accordance with the invention. The RFID transponder device is arranged within the space such that, in operational use, in a first state corresponding with an absence of the object of interest within the space, the light directed to the RFID transponder device is substantially not blocked thereby exposing the RFID transponder device to light with first predefined light intensity, and in a second state corresponding with a presence of the object of interest within the space, the light is at least partially blocked by the object of interest thereby exposing the RFID transponder device to light with a remaining one of the second predefined light intensity. The detection system is one of the many applications of the RFID transponder device of the invention. Detecting the presence of the object of interest within the space effectively constitutes a means of location detection, namely located within the space, or located elsewhere. The invention can be further extended to multiple spaces, each space having a respective RFID transponder device for determining if the object of interest is within the space (by light intensity modulation caused by the object of interest). Such application is particularly useful in factories where product have to be traces within a product line, such as products on a conveyor belt. Here it must be stressed that the RFID transponder device of the prior art is not suitable for accurate determination of the position of an object of interest on which such RFID transponder device is provided. The information provided by those RFID transponder devices only provides rough information about the location, namely whether the RFID transponder is within operation distance of an RFID reader device.

The combination of the carrier assembly and the RFID transponder chip is referred to as RFID transponder (device). Such RFID transponder device may be provided in different formats, such as contactless transponder cards or contactless smartcards or proximity cards or stickers (sometimes also being referred to as RFID tag). These RFID transponder devices may be applied in various different applications of which a couple are mentioned in the embodiments discussed hereinafter. In case of relatively stiff carrier assemblies such as for smartcards it may be required to make a window in the carrier assembly such that the RFID transponder chip can be at least partially exposed to light. Such a smartcard then becomes even "smarter" as it knows whether it has been inserted into a set-top box for example, which is an advantageous embodiment of the invention.

In a variant of the last mentioned-detection system, in accordance with the second object, the system comprises:
- the space for receiving the object of interest, the space comprising, in operational use, light with a further predefined light intensity, and
- an RFID transponder device
   the RFID transponder device being provided on the object of interest such that, operational use, in a first state corresponding with a presence of the object of interest within the space, the RFID transponder device on the object of interest is exposed to light with the first predefined light intensity and the second predefined light intensity, and in a second state corresponding with an absence of the object of interest within the space, the RFID transponder device is exposed to light with the second predefined light intensity. As will be discussed in the description of the figures this variant obtains a similar effect as the other detection system. Which one is most suitable depends on the application.

In a third aspect, in accordance with the third object, the invention relates to a package or storage configured for receiving an object of interest, wherein the package or storage is provided with the RFID transponder device in accordance with the invention. Furthermore, the RFID transponder device is configured for determining the presence of the object of interest within the package or storage by detecting changes of the light intensity which are caused by the object of interest. This embodiment has an enormous amount of applications which will be more elaborately discussed in the description of the figures. A few examples which are given here are: a wine box for determining whether wine bottles have been taken out of the box, a parking lot for determining if a car is parked over it, and a file cabinet for determining whether a specific file has been taken from it or not.

In a fourth aspect, in accordance with the third object, the invention relates to a product provided with the RFID transponder device in accordance with the invention, Furthermore, the RFID transponder device is configured for determining the light intensity of the environment of the object of interest within the package or storage. The advantage of a product provided with the RFID transponder device is that, besides the information already provided by the RFID transponder device, also information is transmitted to the reader about the environment of the product (e.g. product exposed to light, product exposed to dark, product exposed to predefined light intensity). The latter information may be used in combination with information known about the environment to provide more detailed location information about the product. In the prior art RFID solutions the only information which can be obtained, is whether the product is within the operation distance from the reader or not.

In a fifth aspect the invention relates to the use of the RFID transponder device in accordance with the invention as a light-sensor in the detection system in accordance with the invention. The inventors are the first who identified the possibility to use an RFID transponder device as light-sensor in a detection system. For this reason such use is considered to fall within the scope of the invention.

These and other aspects of the invention are apparent from and will be elucidated with reference to the embodiments described hereinafter.

### BRIEF DESCRIPTION OF THE DRAWINGS

In the drawings:
Fig. 1 shows an RFID system as known from the prior art;
Fig. 2a shows an RFID system in accordance with a first embodiment of the invention;
Fig. 2b shows an RFID system in accordance with a second embodiment of the invention;
Fig. 2c shows an RFID system in accordance with a third embodiment of the invention;
Figs. 3a to 3c show tables with responses of the RFID transponder device in accordance with different embodiments the invention;
Fig. 4a shows a schematic top view of an RFID transponder device in accordance with the invention;
Fig. 4b shows a cross-sectional view of the RFID transponder device of Fig. 4a;
Fig. 5 shows a detection system in accordance with another embodiment of the invention.
Fig. 6 shows a variation of the detection system of Fig. 5, and
Fig. 7 shows a position detection system in accordance with a further embodiment of the invention.

### List of reference numerals:

- RW: RFID reader device / RFID reader
- 1: RFID transponder device/RFID tag
- 2: RFID transponder chip
- 5: tag antenna
- 10: analog front-end
- 15: matching circuit
- 20: rectifier circuit
- 30: electronic circuit (of RFID tag)
- 31: light sensor (e.g. photodiode) / control circuit
- 35: cover shield / light-sensitivity compensation means (circuit or specific technology options)
- 36: window
- 50: antenna layer / antenna
- 60: substrate layer (part of RFID carrier assembly 99)
- 99: RFID carrier assembly
- 100: electric circuit (of RFID reader)
- 105: further antenna (of RFID reader)
- 200: object of interest / product
- 888: space
- 999: light
- Vdd: supply voltage
- TID: light-intensity dependent response (unique ID, state of the device, or any other information)
- NID: no response at given light intensity
- TID1: first response at first light intensity
- TID2: second response at second light intensity
- TID3: third response at third light intensity
- TID4: fourth response at fourth light intensity
- LS: light source (sun)
- T1: first antenna terminal (part of RFID carrier assembly 99)
- T2: second antenna terminal (part of RFID carrier assembly 99)
- Drk: dark (very low light intensity)
- L: low light intensity
- M: medium light intensity
- H: high light intensity

### DETAILED DESCRIPTION OF THE PREFERRED EMBODIMENT

RFID technology is being used in many different applications, such as electronic passports, contactless credit cards (E-banking), access control or public transport ticketing, contactless credit cards, and also product tagging (replacement of barcodes). In all such application the operation of the RFID transponder device is similar. An RFID reader device broadcasts a request to the RFID transponder, after which the RFID transponder responds with send a response to the RFID reader. In some applications the RFID transponder may further respond with performing an action, such as controlling a further device.

In this description the wording "sending a/the response" must be interpreted broadly. There may be transponder devices which do not send a response back to the reader device upon request of the reader device. Instead only an action is performed. Despite the fact that this behavior might violate some RFID standards, the invention is still applicable to such devices. Thus, instead of sending a response back to the reader device, the response of such RFID transponder constitutes performing a first action in case of the first light intensity, and not performing the first action in case of the second light intensity. For the embodiment analogous reasoning may be given.

No matter what application is being pursued, the invention proposes to use light-sensitivity for determining the response (and/or action) of the RFID transponder device, i.e. to make the response of the RFID transponder device dependent on the light intensity to which the device is exposed. In this way an extremely cheap light sensor has been created which can be used in an enormous amount of applications.

In order to facilitate the discussion of the detailed embodiments a few expressions are defined hereinafter.

Throughout this description the term "carrier assembly" refers to a carrier device onto which or into which an RFID transponder device is provided. Such carrier assembly may take the form of a sticker or a flexible card, for example. The carrier assembly generally comprises the antenna for the RFID transponder device.

Throughout this description the term "consumer device" refers to both electronic as well as non-electronic consumer products. In particular in the field of barcodes it is not essential that the device is electronic. RFID transponder cards are often integrated into or sticked onto electronic consumer devices, such as mobile phones.

Throughout this description the term "object of interest" refers to literally any object of interest of which the presence and/or location must be detected. This includes consumer products, transport vehicles, live creatures, such as human beings and animals. However, it also includes intermediate products or unfinished items during a production process, or spare parts.

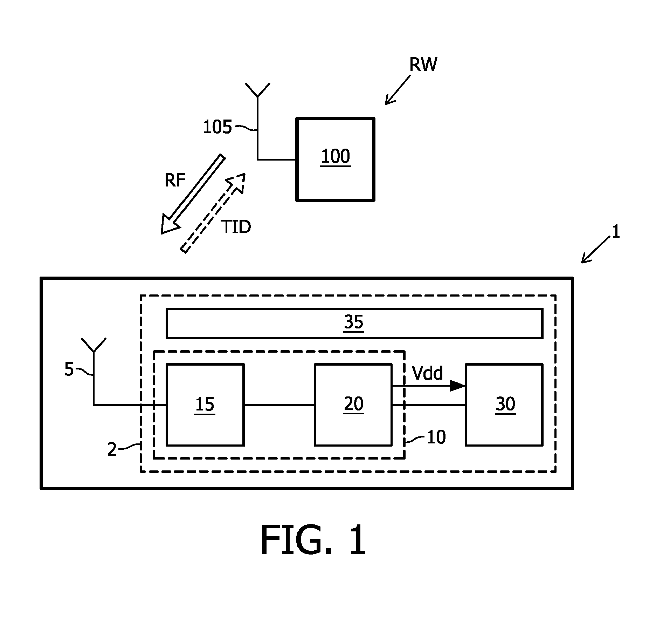

Fig. 1 shows an RFID system as known from the prior art. The RFID system comprises an RFID transponder device 1 (also being referred to as RFID tag) and a RFID-reader device RW (also being referred to as RFID reader) for reading and/or writing the RFID-tag. The RFID tag 1 comprises a tag antenna 5 for receiving an RF signal (a request RF) from the RFID-reader RW, a front-end circuit 10, and an electronic circuit 30. The tag antenna 5 is electrically connected to the front-end circuit 10, and the front-end circuit 10 is electrically connected to the electronic circuit 30. The electronic circuit 30 comprises different components, such as: coding and decoding circuitry (not shown), a digital circuit or processing unit (not shown), and a memory block (not shown) for storing specific data, i.e. identification data. The front-end circuit 10 and the electronic circuit are typically comprised in an RFID transponder chip 2, whereas the tag antenna 5 is typically provided on a carrier assembly on which the RFID transponder chip 2 is mounted. Independent of the used frequency (LF, HF, UHF, etc.) the tag antenna may be a loop antenna, a dipole or a combination of various antenna types, depending on the application.

The front-end circuit 10 comprises a matching circuit 15 that is electrically connected between the tag antenna 5 and a rectifier circuit 20. The matching circuit 15 is arranged for impedance-matching of the tag antenna 5. An output signal (still an RF signal) of the matching circuit 15 is supplied to the rectifier circuit 20. The main task of the rectifier circuit 20 is to convert the RF output signal of the matching circuit 15 into a supply voltage Vdd (DC-voltage) for the electronic circuit 30. To this end the rectifier circuit 15 comprises a rectifying stage (not shown). In some RFID tags, this rectifying stage is merged with a charge-pump stage (not-shown) in order to boost the supply voltage Vdd on the output (the input power may be very low). This also depends on the operating frequency. For UHF-RFID (840 MHz - 2.5 GHz) such charge-pump is a critical element. For 13MHz RFID, no charge-pump is used, because under typical conditions the voltage from the antenna is high enough. Also, the rectifier circuit 15 may comprise a stabilization stage (not shown) for stabilizing the supply voltage Vdd on the output (the input power may be strongly fluctuating). This block is sometimes also being referred to as voltage limiter in the prior art. In 13MHz RFID the voltage limiter is a critical element. Some of the most common problems encountered when designing the analog front-end 10 of the RFID-tag 1 are: i) the matching properties of the matching circuit 15 with the tag antenna 5, ii) the power consumption in the rectifier circuit 20, and iii) the low conversion efficiency of the rectifier circuit 20. The RFID reader RW comprises a further antenna 105 and an electric circuit 100. In operation the RFID reader RW broadcasts a request to the RFID tag 1, after which the RFID tag 1 responds with send a response TID to the RFID reader RW. The components and the operation of the RFID tag 1 and the RFID reader RW are well-known to the person skilled in the art and are not discussed in more detail in this description. Also, variations of the RFID tag 1 have been disclosed in the prior art.

The RFID tag 1 of Fig. 1 further comprises light-sensitivity compensation means for compensating light-sensitivity of the circuitry. The operation of an electronic circuit in semiconductor technology is affected by incident light. Therefore the prior art solution provide measures to compensate for this light-sensitivity. In Fig. 1 the light-compensation means comprise a cover shield 35 which covers the circuitry. Such cover shield may be a metal plate covering the semiconductor device (manufactured in the top-metal layer of the process technology that is used). Other solutions in the prior art are additional light-compensation circuitry configured for compensating for the operation variations induced by light intensity variations. Yet another solution in the prior art is to use special process options in the process technology to render the technology less light-intensity dependent. As will become apparent later in the description all those measures have become superfluous in the RFID transponder of the invention.

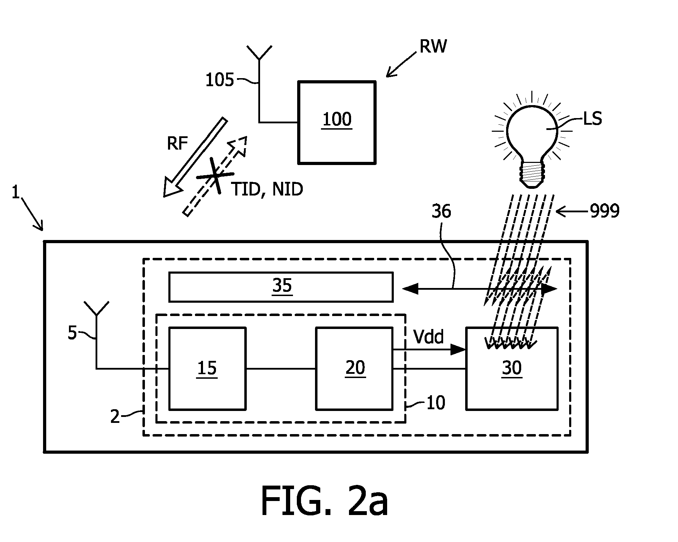

Fig. 2a shows an RFID system in accordance with a first embodiment of the invention. This embodiment will be discussed in as far as it differs from the RFID system of Fig. 1. The figure shows a light source LS emitting light 999 to which the RFID tag 1 is exposed. The light source LS may be any type of light source including the sun, the stars and the moon. The cover shield 35 has been partially removed in order to form a window 36 for allowing light 999 to reach the electronic circuit 30. In case the light-sensitivity compensation means comprised additional compensation circuitry or special process options these means can be removed as well in this embodiment. The embodiment of Fig. 2a operates as follows. When the light intensity of the light 999 is below a certain threshold value the RFID tag 1 operates normally, i.e. the device 1 will respond with sending a response TID to the RFID reader RW. When the light intensity is above a certain threshold value the light 999 that is incident on the electronic circuit 30 (manufactured in a semiconductor technology such as CMOS technology on a silicon substrate) will cause the operation of the electronic circuit 30 to fail, which means that no response ID is send to the RFID reader RW. The failure of the device is caused by the fact that photons induce electron-hole pairs in the substrate, and if the number of electron-hole pairs becomes too high, the circuit will fail to operate or work in an undefined manner. It must be noted that this effect as such is known in the prior art as a parasitic effect in semiconductor circuits which must be counter-acted. In the invention this effect is used to advantage. The result is that the RFID reader RW obtains information about the light to which the RFID tag 1 is exposed. Such information can be used to obtain location information of the RFID tag 1 when certain aspects of the environment are known (such as the light intensity for a given space). Alternatively, the RFID tag 1 may be used to detect an object in the vicinity. Such object may modulate the light falling on the RFID tag 1.

The embodiment in Fig. 2a may be varied on different aspects. For example, the cover shield 35 may also be completely removed or it may be partially replaced with a transparent cover shield for forming the window 36. Alternatively, the window 36 may be provided at other locations then the electronic circuit 30 as long as the incident light will cause the complete circuit to fail given above a certain light intensity threshold.

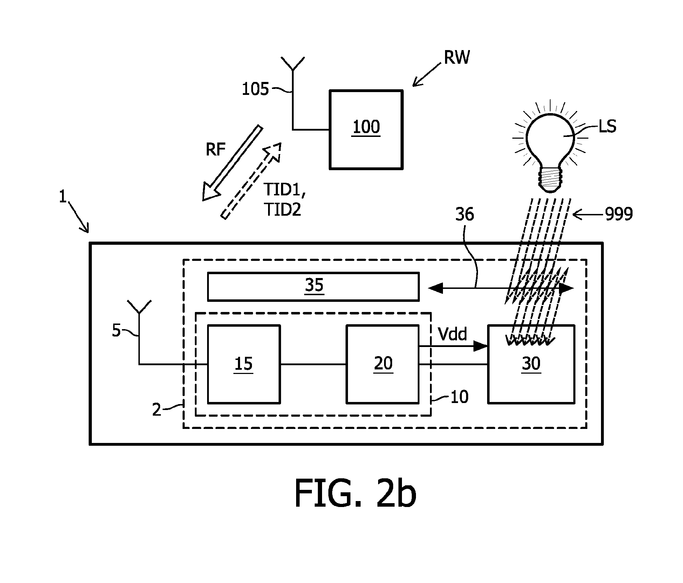

Fig. 2b shows an RFID system in accordance with a second embodiment of the invention. This embodiment will be discussed in as far as it differs from the embodiment of Fig. 2a. Instead of sending no response NID in case of a light intensity exceeding the earlier-mentioned threshold, a second response TID2 is send which is different from the first response TID1. By doing so, the same information can be obtained in Fig. 2a. The implementation of the RFID tag 1 in Fig. 2b may be, at least to a large extent, similar to the one of Fig. 2a, but in that case the RFID tag 1 is preferably used in light intensity a range below the threshold as discussed in Fig. 2a. Furthermore, in that embodiment the RFID transponder chip 2 comprises means to distinguish between different light-intensities within this range. Different options exist, such as a resistance measurement of a light-sensitive resistor (not shown in the drawing) which is exposed to the light 999. Such resistor and resistance measurement circuit may be implemented in the electronic circuit, but this is not essential. What is important is that the response that is selected to be send by the RFID tag 1 is controlled by the light intensity that is detected.

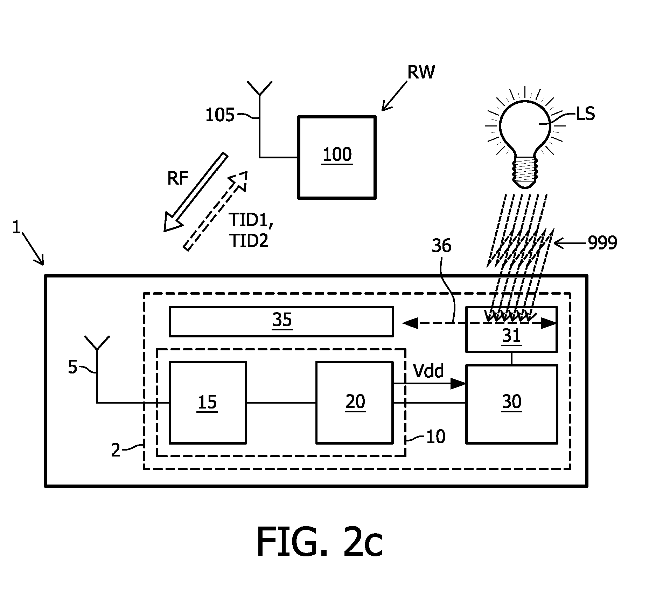

In case the RFID tag 1 of Fig. 2b has be used at higher light intensities it may be required to make the window 36 smaller such that only a very small part of the circuitry is exposed to light. Such part may be the earlier-mentioned light-sensitive resistor for example, but also another type of light sensor as shown in Fig. 2c, which shows an RFID system in accordance with a third embodiment of the invention. This embodiment will be discussed in as far as it differs from the embodiments in Fig. 2a and Fig. 2b. The RFID tag 1 of this embodiment comprises a light sensor 31 which is configured for being exposed to the light 999. For this purpose, it has been provided within the window 36, but it may also be provided on a different location as long as it is exposed to the light 999 in operational use. The advantage of this embodiment is that the light sensor 31 can be optimized for specific light intensities and a specific sensitivity. The light sensor 31 may be provided with control circuitry to set the desired response of the RFID tag 1 in dependence of the light intensity or to deactivate the response in other embodiments. In the embodiment of Fig. 2c the incident is preferably confined to the light sensor 31 only. In such set-up the designer of the RFID tag 1 may freely choose the light-intensity threshold and the corresponding response TID1, TID2 corresponding with light intensities up and above this threshold. In case of embodiments that send no response at a specific light intensity, it is no longer preferred that this is when the light intensity is higher than a threshold. Instead, the designer may freely choose which light intensity range or value to pick.

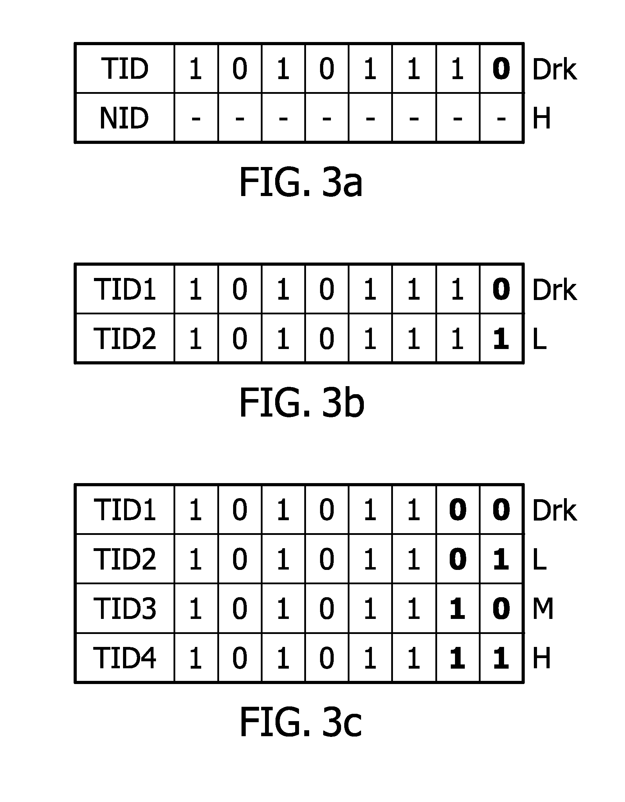

Figs. 3a to 3c show tables with responses of the RFID transponder device in accordance with different embodiments the invention. The responses are just for illustration purposes. The length of the responses and the values of the individual bits have been chosen randomly. The table in Fig. 3a illustrates the situation for the embodiment of Fig. 2a. At a low light intensity, such as darkness Drk, the RFID tag 1 sends the first response TID to the RFID reader RW. At a high light intensity H above a certain threshold, such as daylight, the RFID tag 1 sends no response NID to the RFID reader RW. The table in Fig. 3b illustrates the situation for the embodiment of Fig. 2b. At a low light intensity below a certain threshold, such as darkness Drk, the RFID tag 1 sends the first response TID1 to the RFID reader RW. At a low high light intensity L above a certain threshold, such as twilight, the RFID tag 1 sends the second response TID2 to the RFID reader RW. Fig. 3c serves to illustrate that it falls within the scope of the invention to adapt the RFID tag 1 such that it provides more than 2 different response TID1, TID2, TID3, TID4 in dependence of the light intensity to which the tag 1 is exposed. In Fig. 3c 4 different response have been drawn, which enable to differentiate between 4 different light intensities or light intensity ranges. In this example, the levels are darkness Drk, low light intensity L (for example twilight), medium light intensity M (for example office light), and high light intensity H (for example daylight). The light sensor 31 may be a light-sensitive diode for example. Such diode acts as an analog device in the sense that the current generated in the diode varies with the light intensity. It is also possible to implement two or more light sensors, each sensor being optimized for a specific light intensity. Many variations are possible in this respect.

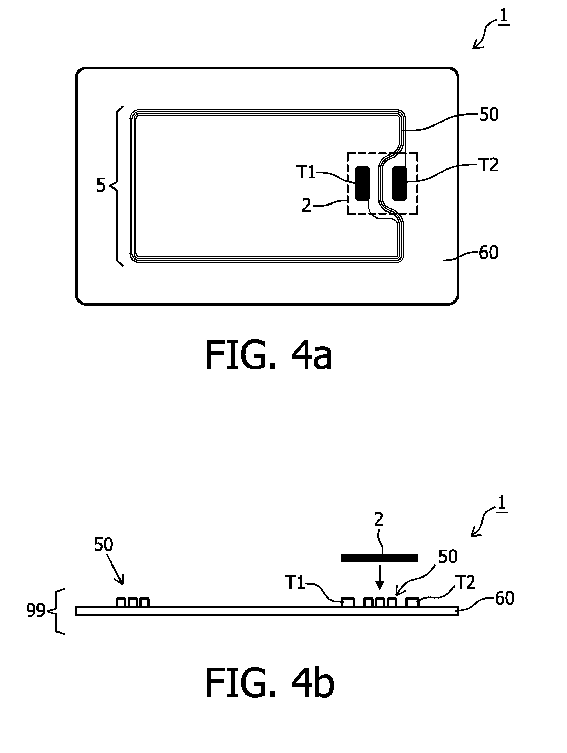

Fig. 4a shows a schematic top view of an RFID transponder device in accordance with the invention. Fig. 4b shows a cross-sectional view of the RFID transponder device of Fig. 4a. In this example the RFID transponder device 1 comprises a carrier assembly 99 comprising a substrate layer 60 onto which an antenna layer 50 is provided. The antenna layer 50 has been patterned to form the tag antenna 5. The tag antenna 5 in this example is a loop antenna having two terminals T1, T2 for being connected to the transponder chip 2. In other embodiments the tag antenna 5 is a dipole antenna (UHF RFID applications). The transponder chip 2 may comprise a cover shield 35 implemented in a top metal layer, or other light-sensitivity compensation means, but advantageous embodiments of Fig. 2a do not need any such measure at all. In any case what is important that there is at least provided a window for allowing light 999 to reach at least part of the electronic circuit of the transponder chip or a separate light sensor provided elsewhere on the semiconductor assembly 99 (in that case the sensor has to be coupled to the transponder chip 2 for controlling its operation.

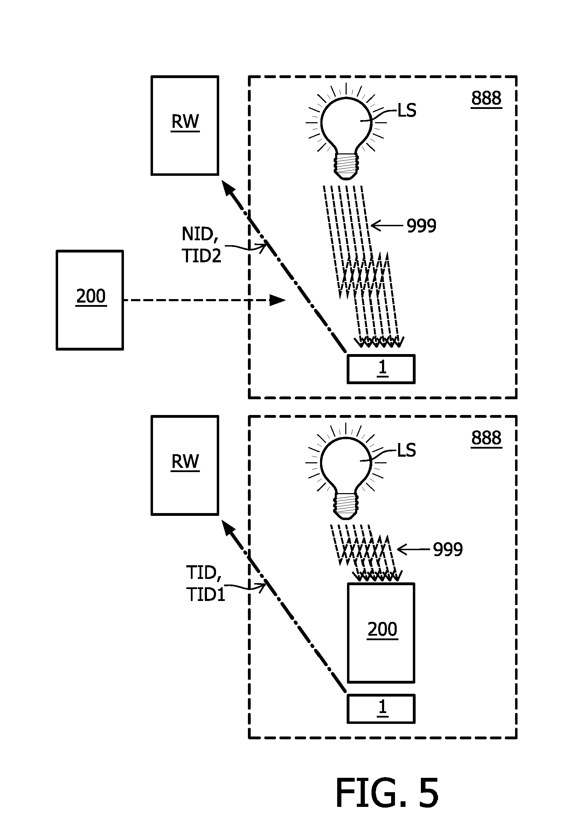

The RFID transponder of the invention has a wide range of applications. Fig. 5 shows a detection system in accordance with another embodiment of the invention. The system comprises a space 888 having a light source LS that emits light 999 with a certain predefined light intensity. It is not essential that the space is bound by walls, although for many embodiments this may be true. What is more important is the space 888 defines a collection of positions having light with a predefined light intensity. Outside the space 888 there is light with a different light intensity (or no light at all). For the purpose of illustrating the invention this may also be reversed in that the light is outside the space 888 and inside the space 888 there is darkness or a different light intensity. The detection system further comprises an RFID reader device RW and a object of interest 200. Within the space 888 there is provided an RFID transponder device 1 of the invention. When the object of interest 200 is outside the space 888 the RFID transponder device 1 receives the light 999 with a first light intensity and thereby responds to a request from the reader device RW with no response NID or a second response TID2. The configuration of the system is such that when the object of interest 200 is brought within the space 888 at least part of the light 999 incident on the RFID transponder device 1 is blocked by the object of interest and thus the light 999 incident on the RFID transponder device 1 has a light intensity lower than before, i.e. the RFID transponder device 1 is exposed to a first light intensity. As a consequence of this the RFID transponder device 1 replies to a request from the RFID reader device RW with a first response TID, TID1. Thus, the system of Fig. 5 knows exactly when the object of interest is within the space 888 or outside the space.

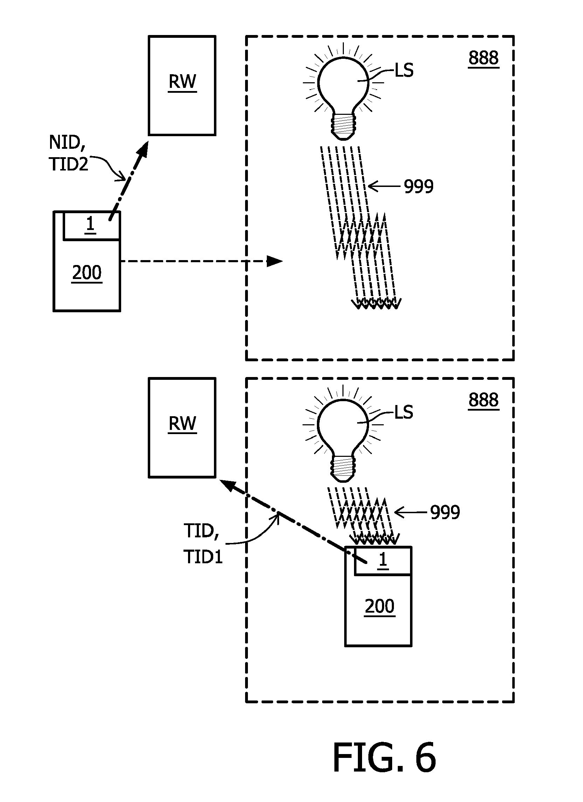

Fig. 6 shows a variation of the detection system of Fig. 5 in that the RFID transponder device 1 is now provided on the object of interest 200 itself. The principle of operation is exactly the same, however, and therefore this embodiment is not discussed in detail here.

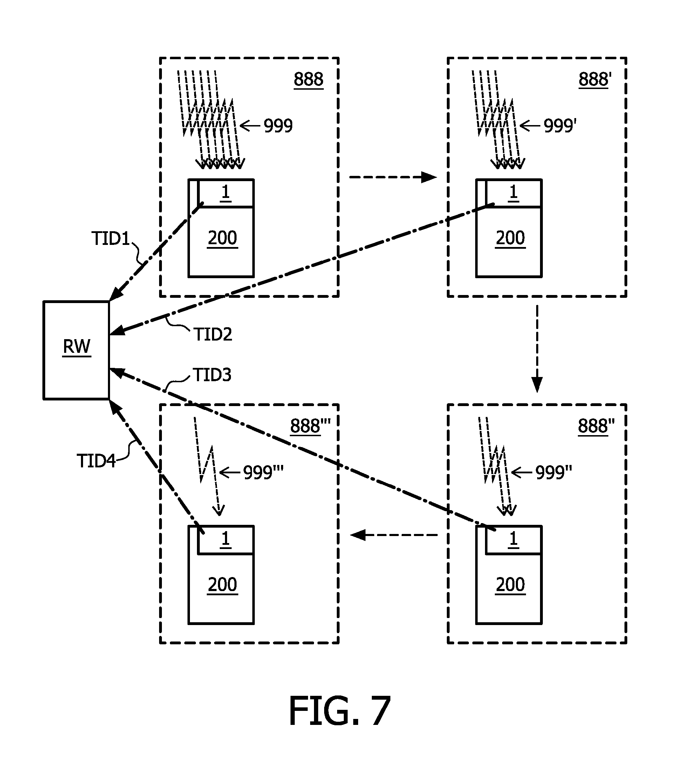

As a matter of fact Figs. 5 and 6 illustrate position detection systems, namely whether the position of the object of interest 200 is within our outside the space 888. The idea of Figs. 5 and 6 can be extended to more accurate position detection. This is illustrated in Fig. 7 which shows a position detection system in accordance with a further embodiment of the invention. The system comprises a plurality of spaces 888, 888', 888", 888"' (this may be any number of spaces), wherein each space has light 999, 999', 999", 999"' with a different light intensity. Just as in Figs. 5 and 6 the position detection system comprises the RFID reader device RW and the object of interest 200. In this example the object of interest 200 comprises the RFID transponder device 1. When the object of interest 200 is within the first space 888' the device 1 responds (to a request) with a first response TID1, when the object of interest 200 is within the second space 888" the device 1 responds with the second response TID2, etc. In other words, the response received from the RFID transponder device 1 gives information about in which space, i.e. the location, the object of interest resides. It is not essential that the spaces are provided with four different light intensities. It may also be that the light intensity alternates between two levels for subsequent spaces. In that case a further RFID reader device (not shown) may be provided which is arranged for detecting the object of interest 200 within the latter two spaces 888", 888"', while the first RFID reader device RW is arranged for detection in the first two spaces 888',888". Many other variations are possible as well.

Both variants of the detection system of the invention and the position detection system of the invention may be applied in the following applications (not exhaustive list):
- detection system, which detects the presence of a person in a toilet;
- detection system, which detects whether a car has been parked on a parking lot;
- a "clever" wine storage box or refrigerator, which detects the removal of wine bottles (the RFID tag being provided in the wine bottle spaces or on the bottles);
- a "smart" smart-card system, which detects whether the smart card has been inserted in a set-top box;
- a warehouse pallet space detection system, which detects the presence of pallet ((the RFID tag being provided in the pallets or within the pallet spaces);
- a seat occupation detection system, which detects which seats are occupied (RFID tag provided in the seats);
- a window detection system, which detects whether the window is open or closed;
- a "smart" file cabinet, which detects which files are taken from the cabinet (the RFID tag being provided in the files or within the cabinet) ;
- a "smart" book shelf, which detects which books are taken from the shelf (the RFID tag being provided in the books or within the shelf);
- road sensor systems for traffic lights and speed detection, which detects whether a vehicle is passing by or not (RFID tag being provided in the road), and
- a product location detection system in a fabric, where products are moving over conveyor belts from location to location.

The invention thus provides an RFID transponder device 1 comprising: i) a carrier assembly 99 comprising an antenna 5 having contacts T1, T2 for being coupled to an RFID transponder chip 2, and ii) the RFID transponder chip 2 mounted on the carrier assembly 99 and being connected to the contacts T1, T2. The RFID transponder device 1 is configured for allowing light to reach the RFID transponder chip 2, and the RFID transponder chip 2 is configured for responding, in operational use, to a request of an RFID reader device RW, by sending a first response TID, TID1 when exposed to light 999 with a first predefined light intensity, and by not sending the first response TID, TID1 when exposed to light 999 with a second predefined light intensity that is different from the first predefined light intensity. The invention further provides detection systems and position detection systems comprising such RFID transponder device. The invention provides an RFID transponder device which has additional functionality and which provided more information to the RFID reader device than the known RFID transponder devices. This additional functionality enables a wide range of applications.

The invention may be applied in various application areas. For example, the invention may be applied in RFID transponders. It must be noted that the invention is applicable to any type of transponders like active transponders, semi-passive, semi-active as well as passive transponders.

Various variations of the invention are possible and do not depart from the scope of the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage. Throughout the Figures, similar or corresponding features are indicated by same reference numerals or labels.

## Claims

1. An RFID transponder device (1) comprising:
- a carrier assembly (99) comprising an antenna (5) having contacts (T1, T2) for being coupled to an RFID transponder chip (2), and
- the RFID transponder chip (2) mounted on the carrier assembly (99) and being connected to the contacts (T1, T2),
wherein the RFID transponder device (1) is configured for allowing light to reach the RFID transponder chip (2), and wherein the RFID transponder chip (2) is configured for responding, in operational use, to a request of an RFID reader device (RW), by sending a first response (TID, TID1) when exposed to light (999) with a first predefined light intensity, and by not sending the first response (TID, TID1) when exposed to light (999) with a second predefined light intensity that is different from the first predefined light intensity.

2. The RFID transponder device (1) as claimed in claim 1, wherein the RFID transponder chip (2) is further configured for responding, in operational use, to the request of the RFID reader device (RW) with sending a second response (UID2) when exposed to light (999) having the second predefined light intensity, wherein the second predefined light intensity is different from the first predefined light intensity.

3. The RFID transponder device (1) as claimed in claim 2, wherein the second response (UID2) differs from the first response (UID1) in at least one bit.

4. The RFID transponder device (1) as claimed in claim 2 or 3, wherein at least one of the first response (TID, TID1) and the second response (TID2) is a pseudo-random or random response.

5. The RFID transponder device (1) as claimed in any one claims 2 to 4, wherein the RFID transponder chip (2) is configured for responding, in operational use, to a request of an RFID reader device (RW), by sending a tag response, wherein the tag response is a function of the light intensity to which the transponder device (1) is exposed, to obtain the first response (TID, TID1) and the second response (TID2).

6. The RFID transponder device (1) as claimed in claim 5, wherein said respective tag response as a function of the light intensity differs in at least a plurality of bits from earlier values.

7. The RFID transponder device (1) as claimed in any one of the preceding claims, further comprising a light-sensor (1) arranged at or near the window (36) for receiving said light, wherein the light-sensor (1) is configured for controlling said responding of said transponder chip (2).

8. The RFID transponder device (1) as claimed in any one of the preceding claims, comprising a window (36) for allowing the light to reach the RFID transponder chip (2).

9. The RFID transponder device (1) as claimed in claim 8, wherein the window (36) is formed by partial removal of a cover shield (35) at a location of the RFID transponder chip (2).

10. The RFID transponder device (1) as claimed in claim 8, wherein the window (36) is formed by a cover shield (35) which is at least partially transparent for light.

11. A detection system for detecting an object of interest (200) within a space (888), the system comprising:
- the space (888) for receiving the object of interest (200), the space (888) comprising, in operational use, light (999) with a further predefined light intensity, and
- an RFID transponder device (1) as claimed in any one of claims 1 to 10, the RFID transponder device (1) being arranged within the space (888) such that, in operational use, in a first state corresponding with an absence of the object of interest (200) within the space (888), the light (999) directed to the RFID transponder device (1) is substantially not blocked thereby exposing the RFID transponder device (1) to light (999) with first predefined light intensity, and in a second state corresponding with a presence of the object of interest (200) within the space (888), the light is at least partially blocked by the object of interest (200) thereby exposing the RFID transponder device (1) to light (999) with a remaining one of the second predefined light intensity.

12. A detection system for detecting an object of interest (200) within a space (888), the system comprising:
- the space (888) for receiving the object of interest (200), the space (888) comprising, in operational use, light (999) with a further predefined light intensity, and
- an RFID transponder device (1) as claimed in any one of claims 1 to 10, the RFID transponder device (1) being provided on the object of interest (200) such that, operational use, in a first state corresponding with a presence of the object of interest (200) within the space (888), the RFID transponder device (1) on the object of interest (200) is exposed to light (999) with the first predefined light intensity and the second predefined light intensity, and in a second state corresponding with an absence of the object of interest (200) within the space (888), the RFID transponder device (1) is exposed to light (999) with the second predefined light intensity.

13. A package or storage (888) configured for receiving an object of interest (200), wherein the package or storage (888) is provided with the RFID transponder device (1) as claimed in any one of claims 1 to 10, wherein the RFID transponder device (1) is configured for determining the presence of the object of interest (200) within the package or storage (888) by detecting changes of the light intensity which are caused by the object of interest (200).

14. A product (200) provided with the RFID transponder device (1) as claimed in any one of claims 1 to 10, wherein the RFID transponder device (1) is configured for determining the light intensity of the environment of the object of interest (200) within the package or storage (888).

15. Use of the RFID transponder device as claimed in any one of claims 1 to 10, as a light-sensor in the detection system as claimed in claim 11 or 12.
